# EUROPÄISCHE PATENTANMELDUNG

(11) **EP 2 623 821 A1**
(43) Veröffentlichungstag der Anmeldung: **07.08.2013**
(21) Anmeldenummer: 12154054.6
(22) Anmeldetag: 06.02.2012
(51) Int. Cl.: F16H 57/02, F16H 57/04, F16H 57/027

(54) **Getriebegehäuse, Getriebeeinheit mit einem solchen Getriebegehäuse und Getriebemotor mit einer solchen Getriebeeinheit**

(71) Anmelder: Siemens Aktiengesellschaft, 80333 München (DE)
(72) Erfinder: Schnurr, Wolfgang, 72147 Nehren (DE)

(57) **Zusammenfassung**

Die Erfindung betrifft ein Getriebegehäuse (2) mit einem Gehäusekörper (3), der einen Gehäuseinnenraum umschließt und eine Durchgangsöffnung (6) für eine Getriebeausgangswelle aufweist, welche von einer Anschlussfläche (7) umgeben ist, wobei in dem Gehäusekörper mehrere die Gehäusekörperwandung durchsetzende Bohrungen (8,9,10,11,12) ausgebildet sind, die dazu dienen, Öl in den Gehäuseinnenraum zu füllen oder aus diesem zu abzulassen, den Ölstand in dem Gehäuseinnenraum zu erfassen und den Gehäuseinnenraum zu entlüften. Der Erfindung liegt die Überlegung zugrunde, die Bohrungen, welche im Betrieb als Öleinfüllöffnung, Ölablassöffnung, Entlüftungsöffnung und Öffnung zur Messung des Füllstands vorgesehen sind, derart zu positionieren, dass sie von zwei benachbarten Gehäuseseiten her in den Gehäusekörper eingebracht werden können. Damit ist eine Bearbeitung in einer einzigen Einspannung möglich mit der Folge, dass Umrüstungszeiten entfallen und im Ergebnis der Gehäusekörper einfach in der Herstellung ist.

Des Weiteren betrifft die Erfindung eine Getriebeeinheit und einen Getriebemotor, die mit einem solchen Getriebegehäuse versehen sind.

## Beschreibung

Die Erfindung betrifft ein Getriebegehäuse mit einem Gehäusekörper, der einen Gehäuseinnenraum umschließt und eine Durchgangsöffnung für eine Welle aufweist, welche von einer Anschlussfläche umgeben ist, wobei in dem Gehäusekörper mehrere die Gehäusekörperwandung durchsetzende Bohrungen ausgebildet sind, die dazu dienen, Öl in den Gehäuseinnenraum zu füllen oder aus diesem zu abzulassen, den Ölstand in dem Gehäuseinnenraum zu erfassen und den Gehäuseinnenraum zu entlüften. Des Weiteren betrifft die Erfindung eine Getriebeeinheit und einen Getriebemotor, die mit einem solchen Getriebegehäuse versehen sind.

Getriebemotoren sind in unterschiedlichen Ausführungsformen bekannt und bilden eine Kombination aus einem Motor, in der Regel einem Elektromotor, und einem Untersetzungsgetriebe, das dafür sorgt, dass sich die Abtriebswelle des Getriebes mit einer geringeren Geschwindigkeit, aber einem wesentlich höheren Drehmoment als diejenige des Motors dreht. Von der Anmelderin sind beispielsweise sogenannte MOTOX-Standard-Getriebemotoren erhältlich, die für den Leistungsbereich bis 200kW und einem Getriebemoment bis 20.000Nm mit Stirnrad-, Flachrad- und Kegelstirnradgetrieben lieferbar sind. Ebenso sind Getriebemotoren mit Planetengetriebe erhältlich.

Getriebemotoren werden in der Technik beispielsweise als Stellantriebe für Motoren, Zustellantriebe an Maschinen sowie Antriebe für Roboter, Scheibenwischer etc. eingesetzt. Das Getriebegehäuse ist dabei mit einer Anschlussfläche, in der Regel einem genormten Flansch, versehen, über die sie mit der anzutreibenden Welle verbunden werden kann.

Die Getriebeeinheiten der Getriebemotoren müssen im Betrieb geschmiert werden. Zu diesem Zweck wird der Innenraum des Getriebegehäuses in einem vorgegebenen Maß mit Öl befüllt. Entsprechend sind in der Gehäusewandung des Getriebegehäuses Bohrungen vorgesehen, welche im Betrieb als Öleinfüllöffnung, Ölablassöffnung, Entlüftungsöffnung sowie als Öffnung zur Messung des Füllstands in dem Getriebegehäuse fungieren. Die Bohrungen sind dabei in einer solchen Anzahl vorgesehen und derart positioniert, dass auch in unterschiedlichen Einbaulagen die vorgenannten Funktionen erfüllt werden. Dies erfordert allerdings teilweise eine aufwändige Bearbeitung, da zum Einbringen der Bohrungen das Getriebegehäuse mehrfach umgespannt und positioniert werden muss.

Aufgabe der vorliegenden Erfindung ist es daher, ein Getriebegehäuse sowie eine Getriebeeinheit und einen Getriebemotor anzugeben, die in einfacher Weise hergestellt werden können.

Diese Aufgabe ist erfindungsgemäß dadurch gelöst, dass die Bohrungen von zwei Bearbeitungsseiten her in den Gehäusekörper eingebracht sind, wobei eine erste Gruppe von wenigstens zwei Bohrungen von einer Gehäuseseite her um die Anschlussfläche verteilt in den Gehäusekörper eingebracht ist und eine zweite Gruppe mit den verbleibenden Bohrungen von einer zu der ersten Gehäuseseite benachbarten zweiten Gehäuseseite her in den Gehäusekörper eingebracht ist.

Der Erfindung liegt die Überlegung zugrunde, die Bohrungen, welche im Betrieb als Öleinfüllöffnung, Ölablassöffnung, Entlüftungsöffnung und Öffnung zur Messung des Füllstands vorgesehen sind, derart zu positionieren, dass sie von zwei benachbarten Gehäuseseiten her in den Gehäusekörper eingebracht werden können. Damit ist eine Bearbeitung in einer einzigen Einspannung möglich mit der Folge, dass Umrüstungszeiten entfallen und im Ergebnis der Gehäusekörper einfach in der Herstellung ist.

Gemäß einer Ausführungsform der Erfindung ist dabei vorgesehen, dass die Bohrungen der ersten Gruppe parallel zueinander und insbesondere senkrecht zu der Ebene, welche durch die Anschlussfläche aufgespannt wird, verlaufen. Durch ihre parallele Ausrichtung können die Bohrungen in einem Arbeitsgang hergestellt werden, und durch die Ausrichtung zu der Anschlussfläche können die Bohrungen der ersten Gruppe und die Anschlussfläche hergestellt werden, ohne die Bearbeitungsmaschine zwischen den Arbeitsgängen neu zu justieren.

In gleicher Weise können die Bohrungen der zweiten Gruppe parallel zueinander verlaufen, wobei sie dann zweckmäßigerweise parallel zu der Ebene der Anschlussfläche und damit senkrecht zu den Bohrungen der ersten Gruppe ausgerichtet sind, sodass die Bearbeitungsebenen für die beiden Gruppen von Bohrungen senkrecht zueinander, und auch die Anschlussfläche parallel zu der einen und senkrecht zu der anderen Bearbeitungsebene steht, wodurch die Bearbeitung weiter vereinfacht wird.

Bei einer weiteren Ausführungsform der vorliegenden Erfindung ist vorgesehen, dass die erste Gruppe von Bohrungen insgesamt zwei Bohrungen und die zweite Gruppe von Bohrungen insgesamt drei Bohrungen umfasst, wobei die beiden Bohrungen der ersten Gruppe derart positioniert sind, dass die erste Bohrung dem Ablassen von Öl und die zweite Bohrung dem Messen des Ölstandes dient, wenn das Getriebegehäuse derart ausgerichtet ist, dass die Anschlussfläche zur Seite weist und die Bohrungen der zweiten Gruppe nach oben gerichtet sind. Bei dieser Ausgestaltung kann über die Bohrungen der ersten Gruppe Öl aus dem Gehäuseinnenraum abgelassen sowie der Ölstand gemessen werden. Die nach oben weisenden Bohrungen der zweiten Gruppe können teilweise eingesetzt werden, um Öl in den Gehäuseinnenraum zu füllen oder diesen zu entlüften.

Vorzugsweise sind dabei die Bohrungen der ersten Gruppe derart positioniert, dass die erste Bohrung der Entlüftung und dem Befüllen und die zweite Bohrung der Messung des Ölstandes dient, wenn das Getriebegehäuse derart ausgerichtet ist, dass die Anschlussfläche zur Seite weist und die Bohrungen der zweiten Gruppe nach unten gerichtet sind. In diesem Fall hat die erste Bohrung der ersten Gruppe die Doppelfunktion, das Getriebegehäuse mit Öl zu befüllen sowie zu entlüften, während die zweite Bohrung der Messung des Ölstandes dient. Die nach unten gerichteten Bohrungen der zweiten Gruppe können wahlweise genutzt werden, um Öl aus dem Getriebegehäuse abzulassen.

Ferner können die beiden Bohrungen der ersten Gruppe derart positioniert sein, dass die erste Bohrung dem Ablassen von Öl und die zweite Bohrung der Entlüftung und dem Befüllen dient, wenn das Getriebegehäuse derart ausgerichtet ist, dass die Anschlussfläche zur Seite weist und die Bohrungen der zweiten Gruppe zur Seite weisen. In diesem Fall kann der Ölstand über die jeweils oben liegende Bohrung der zweiten Gruppe erfasst werden.

Damit die Bohrungen der ersten Gruppe die zuvor beschriebenen Funktionen erfüllen können, sind sie bevorzugt am äußeren Rand des Gehäuseinnenraums positioniert, wobei die erste Bohrung in Bezug auf die Mitte der Durchgangsöffnung für die Getriebeausgangswelle etwa eine 7-Uhr-Stellung und die zweite Bohrung etwa eine 4-Uhr-Stellung einnimmt, wenn die Anschlussfläche zur Seite gerichtet ist und die Bohrungen der zweiten Gruppe nach oben weisen.

Die Bohrungen der zweiten Gruppe sind gemäß einer Ausführungsform der vorliegenden Erfindung derart positioniert, dass bei nach oben gerichteter Anschlussfläche eine erste Bohrung dem Ablassen von Öl und eine zweite Bohrung zur Messung des Ölstandes dient und bei nach unten gerichteter Anschlussfläche die erste und/oder die zweite Bohrung der Entlüftung und dem Befüllen und die zwischen der ersten und der zweiten Bohrung liegende dritte Bohrung zur Messung des Ölstandes dient. Hier dienen die Bohrungen der ersten Gruppe dem Befüllen und Entlüften bzw. dem Ablassen von Öl.

In bevorzugter Weise sind die drei Bohrungen der zweiten Gruppe in Form eines Dreiecks angeordnet, wobei die erste Bohrung der zweiten Gruppe an dem fern zu der Anschlussfläche liegenden Endbereich der Gehäuseseite, in welche sie eingebracht ist, liegt, die zweite Bohrung an dem zur Anschlussfläche weisenden Endbereich der Gehäuseseite angeordnet ist und die dritte Bohrung in Getriebeachsrichtung zwischen der ersten und der zweiten Bohrung, aber seitlich beanstandet von diesen positioniert ist.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Getriebeeinheit gemäß der vorliegenden Erfindung in einer Seitenansicht,
- Figur 2: die Getriebeeinheit aus Figur 1 in Vorderansicht,
- Figur 3: die Getriebeeinheit aus den Figuren 1 und 2 in einer Einbaulage, die gegenüber der Figur 2 um 180° um die Getriebeachse gedreht ist, in Seitenansicht,
- Figur 4: die Getriebeeinheit aus Figur 3 in Vorderansicht,
- Figur 5: die Getriebeeinheit in einer Einbaulage, welche gegenüber der Einbaulage aus Figur 2 um 90° im entgegen gesetzten Uhrzeigersinn gedreht ist, in Seitenansicht,
- Figur 6: die Getriebeeinheit aus Figur 5 in einer Vorderansicht auf die Anschlussfläche,
- Figur 7: die Getriebeeinheit in einer Einbaulage, welche gegenüber der Einbaulage aus Figur 2 um 90° im Uhrzeigersinn um die Getriebeachse gedreht ist, in einer Seitenansicht,
- Figur 8: die Getriebeeinheit aus Figur 7 in einer Vorderansicht auf die Anschlussfläche,
- Figur 9: die Getriebeeinheit in einer Einbaulage, in welcher die Anschlussfläche unten liegt, und
- Figur 10: die Getriebeeinheit in einer Einbaulage, in welcher die Anschlussfläche nach oben weist.

In der Zeichnung ist eine Getriebeeinheit 1 gemäß der vorliegenden Erfindung gezeigt, welche Teil eines nicht weiter dargestellten Getriebemotors ist. Die Getriebeeinheit 1 umfasst ein Getriebegehäuse 2 mit einem Gehäusekörper 3, welcher einen Innenraum umschließt, in dem ein Getriebe untergebracht ist. In der Zeichnung ist von dem Getriebe nur das aus dem Getriebegehäuse 2 ragende Ende der Abtriebswelle 4 erkennbar, über welche das Getriebe mit einer Motoreinheit des Getriebemotors verbunden ist. Die Achse X der Abtriebswelle 4 stellt auch die Getriebeachse X dar.

An seinem abtriebsseitigen Endbereich trägt das Getriebegehäuse 2 ferner einen Verbindungsflansch 5, über welchen eine anzutreibende Einheit an der Getriebeeinheit 1 angebracht werden kann.

Der Abtriebswelle 4 und dem Verbindungsflansch 5 gegenüberliegend ist in dem Getriebegehäuse 2 eine Durchgangsöffnung 6 vorgesehen, welche von einer Ausgangs- bzw. Abtriebswelle einer nicht weiter dargestellten Motoreinheit durchgriffen wird. Die Durchgangsöffnung 6 ist von einer Anschlussfläche 7 umgeben, über welche die Motoreinheit mit der Getriebeeinheit 1 verbunden werden kann.

Das Getriebe der Getriebeeinheit 1 muss im Betrieb geschmiert werden. Zu diesem Zweck wird der Innenraum des Getriebegehäuses 2 bzw. des Gehäusekörpers 3 mit Öl befüllt. Entsprechend sind in dem Gehäusekörper 3 mehrere die Gehäusekörperwandung durchsetzende Bohrungen 8, 9, 10, 11, 12 ausgebildet, welche im Betrieb als Öleinfüllöffnung, Ölablassöffnung, Entlüftungsöffnung sowie als Öffnung zur Messung des Ölstandes in dem Getriebegehäuse 2 fungieren. Die Bohrungen 8 bis 12 sind dabei in einer solchen Anzahl vorgesehen und derart positioniert, dass in unterschiedlichen Einbaulagen die vorgenannten Funktionen erfüllt werden.

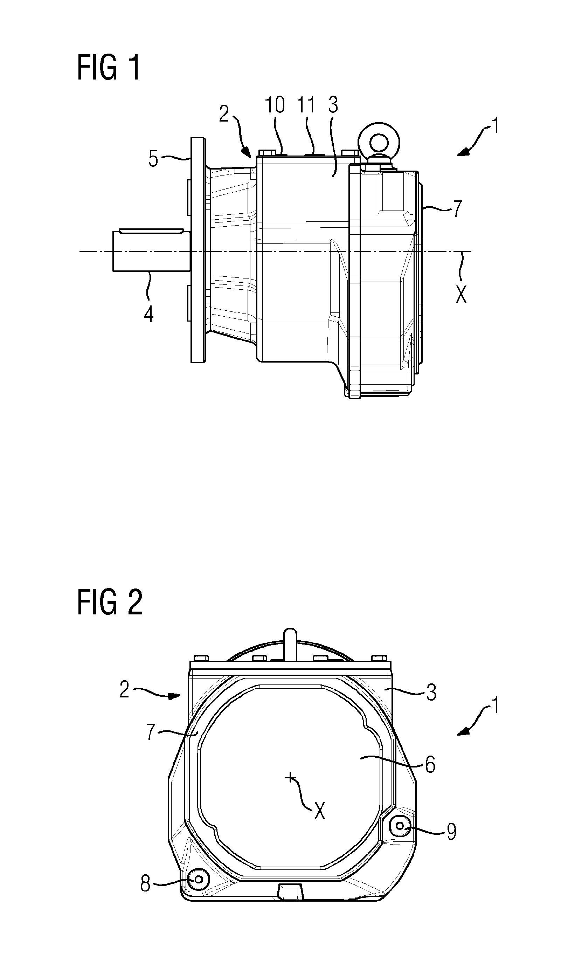

Hierzu sind die Bohrungen 8 bis 12 von zwei Bearbeitungsseiten her in den Gehäusekörper 3 eingebracht, wobei eine erste Gruppe bestehend aus zwei Bohrungen 8, 9 an derjenigen Gehäuseseite, an welcher die Anschlussfläche 7 liegt, in dem Gehäusekörper 3 vorgesehen ist und eine zweite Gruppe mit den verbleibenden drei Bohrungen 10, 11, 12 an einer benachbarten, in den Figuren 1 und 2 oben liegenden Gehäuseseite in dem Gehäusekörper 3 vorgesehen sind. Die beiden Bohrungen 8, 9 der ersten Gruppe sind dabei senkrecht zu einer von der Anschlussfläche 7 aufgespannten Ebene ausgerichtet. Die Gehäuseseite, in welcher die Bohrungen 10, 11, 12 der zweiten Gruppe vorgesehen sind, liegt senkrecht zu der Anschlussfläche 7, und die Bohrungen 10, 11, 12 der zweiten Gruppe sind in den Gehäusekörper 3 senkrecht zu dieser Gehäuseseite eingebracht und erstrecken sich durch einen an dem Gehäusekörper 3 montierte Montagedeckel 3a.

Die Figur 2 lässt erkennen, dass die erste Gruppe von Bohrungen 8, 9 um die Anschlussfläche 7 verteilt angeordnet und am äußeren Randbereich des Gehäusekörpers 3 positioniert ist, so dass die Bohrungen 8, 9 in den Gehäuseinnenraum an dessen äußeren Rand münden. Dabei ist die erste Bohrung 8 in der Figur 2 unten links positioniert, sodass sie bezogen auf die Getriebeachse X etwa eine 7-Uhr-Stellung einnimmt, und die zweite Bohrung bezogen auf die Getriebeachse X etwa in der 4-Uhr-Stellung positioniert.

Die Bohrungen 10, 11, 12 der zweiten Gruppe sind nach Art eines Dreiecks positioniert, wobei die erste Bohrung 10 an dem fern zu der Anschlussfläche 7 liegenden Endbereich der Gehäuseseite, in welche sie eingebracht ist, liegt, die zweite Bohrung 11 an dem zur Anschlussfläche 7 weisenden Endbereich der Gehäuseseite angeordnet ist und die dritte Bohrung 12 in Getriebeachsenrichtung zwischen den ersten und zweiten Bohrungen 10, 11, aber seitlich beabstandet von diesen positioniert ist.

Wenn die Getriebeeinheit 1 im Betrieb wie in den Figuren 1 und 2 dargestellt derart ausgerichtet ist, dass die Anschlussfläche 7 zur Seite weist und die Bohrungen 10, 11, 12 der zweiten Gruppe an der Gehäuseoberseite vorgesehen sind, dient die erste Bohrung 8 der ersten Gruppe als Ölablassöffnung und die zweite Bohrung 9 dazu, den Füllstand in dem Getriebegehäuse 2 zu messen. Die Bohrungen 10, 11, 12 der zweiten Gruppe können wahlweise verwendet werden, um in das Getriebegehäuse 2 Öl einzufüllen bzw. das Getriebegehäuse 2 zu entlüften.

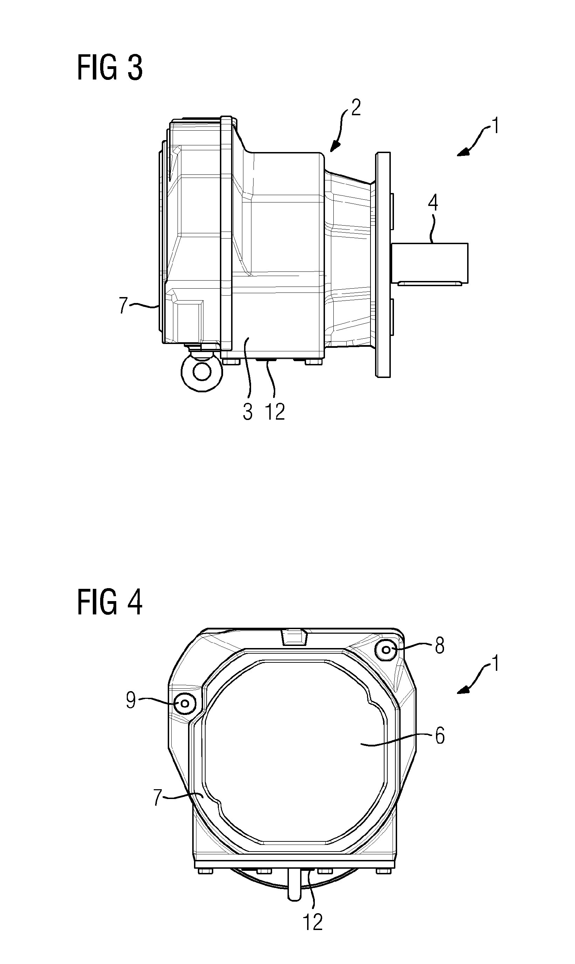

Wenn die Getriebeeinheit 1 auf den Kopf gestellt wird, so dass die Anschlussfläche 7 zur Seite zeigt und die Bohrungen 10, 11, 12 der zweiten Gruppe an der Gehäuseunterseite liegen, wie dies in den Figuren 3 und 4 dargestellt ist, dient die erste Bohrung 8 der ersten Gruppe dem Befüllen und Entlüften des Getriebegehäuses 2 und die zweite Bohrung 9 zum Messen des Ölstandes. Die Bohrungen 10, 11, 12 der zweiten Gruppe können wahlweise eingesetzt werden, um das Öl aus dem Getriebegehäuse 2 abzulassen.

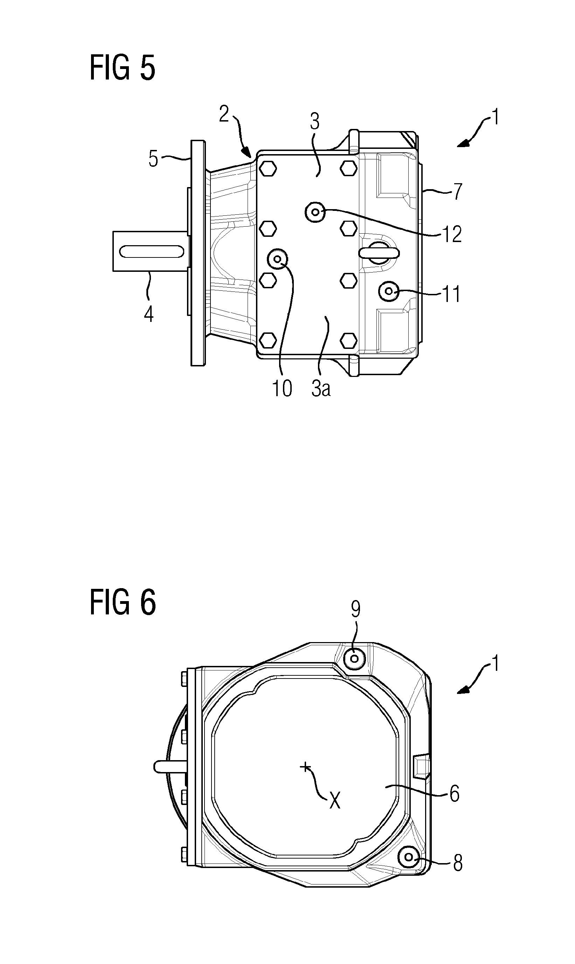

In den Figuren 5 und 6 ist eine Einbaulage dargestellt, bei welcher die Getriebeeinheit 1 gegenüber der in den Figuren 1 und 2 dargestellten Lage um die Getriebeachse X im entgegengesetzten Uhrzeigersinn um 90° gedreht ist, sodass die Bohrungen 10, 11, 12 der zweiten Gruppe zur Seite weisen. In diesem Fall dient die oben liegende zweite Bohrung 9 der ersten Gruppe dem Entlüften und Befüllen des Getriebegehäuses 2, die erste Bohrung 8 der ersten Gruppe dem Ablassen von Öl und die oben liegende erste Bohrung 10 der zweiten Gruppe der Messung des Ölstandes. Die zweiten und dritten Bohrungen 11, 12 der zweiten Gruppe haben hier keine Funktion.

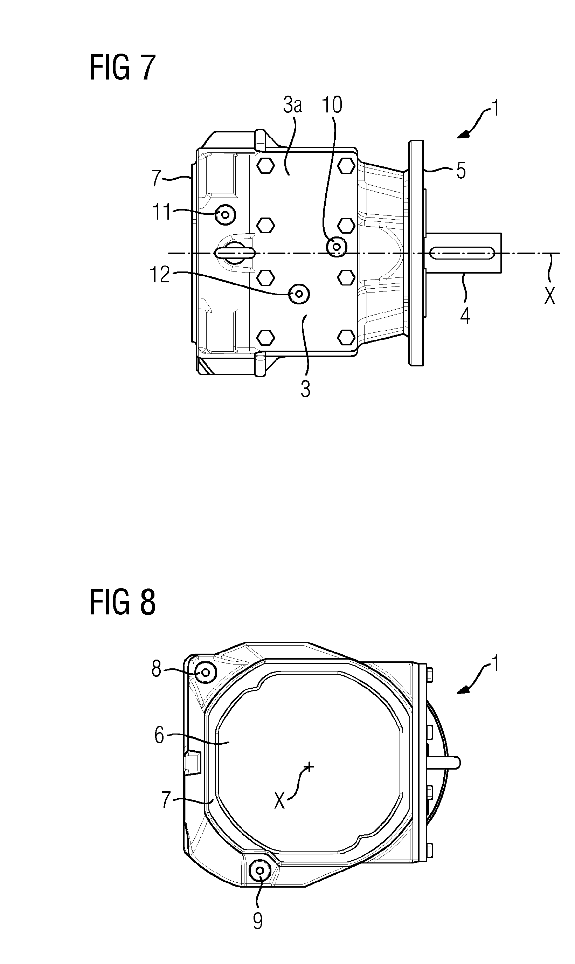

Wird die Getriebeeinheit 1 in einer Einbaulage verwendet, die gegenüber der in den Figuren 1 und 2 dargestellten Einbaulage um die Gehäuseachse im Uhrzeigersinn um 90° verschwenkt ist, wie dies in den Figuren 7 und 8 gezeigt ist, dient die oben liegende erste Bohrung 8 der ersten Gruppe dem Befüllen und Entlüften des Getriebegehäuses 2 und die zweite Bohrung 9 der ersten Gruppe zum Ablassen von Öl, während die oben liegende dritte Bohrung 12 der zweiten Gruppe zur Messung des Ölstandes dient.

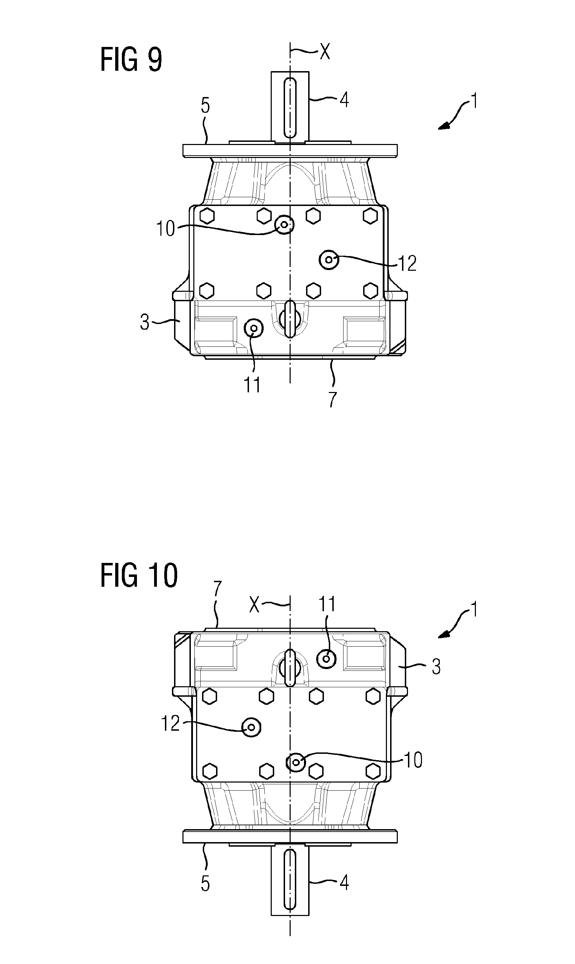

In der Figur 9 ist die Getriebeeinheit 1 in einer Einbaulage dargestellt, welche die Anschlussfläche 7 nach unten weist. Hier dient die oben liegende erste Bohrung 10 der zweiten Gruppe dem Befüllen und Entlüften des Getriebegehäuses 2 und die darunterliegende dritte Bohrung 12 der zweiten Gruppe der Messung des Ölstandes. Die nach unten gerichteten beiden Bohrungen 8, 9 der ersten Gruppe können wahlweise verwendet werden, um Öl aus dem Getriebegehäuse 2 abzulassen.

In der Figur 10 ist schließlich die Getriebeeinheit 1 in einer Einbaulage dargestellt, in welcher die Anschlussfläche 7 nach oben weist. Hier können die Bohrungen 8, 9 der ersten Gruppe wahlweise eingesetzt werden, um das Getriebegehäuse 2 mit Öl zu befüllen bzw. zu entlüften. Die dann oben liegende zweite Bohrung 11 der dritten Gruppe dient der Messung des Ölstandes, und die untenliegende erste Bohrung 10 der zweiten Gruppe dient dem Ablassen von Öl.

Sämtliche Bohrungen 8 bis 12 sind im Betrieb verschlossen und können hierzu beispielsweise als Gewindebohrungen ausgebildet sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Getriebegehäuse (2) mit einem Gehäusekörper (3), der einen Gehäuseinnenraum umschließt und eine Durchgangsöffnung für eine Welle aufweist, welche von einer Anschlussfläche umgeben ist, wobei in dem Gehäusekörper (3) mehrere die Gehäusekörperwandung durchsetzende Bohrungen (8, 9, 10, 11, 12) ausgebildet sind, die dazu dienen, Öl in den Gehäuseinnenraum zu füllen oder aus diesem abzulassen, den Ölstand in dem Gehäuseinnenraum zu erfassen und den Gehäuseinnenraum zu entlüften, **dadurch gekennzeichnet, dass** die Bohrungen (8, 9, 10, 11, 12) von zwei Bearbeitungsseiten her in den Gehäusekörper (3) eingebracht sind, wobei eine erste Gruppe von wenigstens zwei Bohrungen (8, 9) von einer Gehäuseseite her um die Anschlussfläche (7) verteilt in den Gehäusekörper (3) eingebracht ist und eine zweite Gruppe mit den verbleibenden Bohrungen (10, 11, 12) von einer zu der ersten Gehäuseseite benachbarten zweiten Gehäuseseite her in den Gehäusekörper (3) eingebracht ist.

2. Getriebegehäuse (2) nach Anspruch 1,
**dadurch gekennzeichnet, dass**
die Bohrungen (8, 9) der ersten Gruppe parallel zueinander verlaufen.

3. Getriebegehäuse (2) nach Anspruch 2,
**dadurch gekennzeichnet, dass**
die Bohrungen (8, 9) der ersten Gruppe senkrecht zu der Ebene, welche durch die Anschlussfläche (7) aufgespannt wird, verlaufen.

4. Getriebegehäuse (2) nach einem der vorherigen Ansprüche, **dadurch gekennzeichnet, dass**
die Bohrungen (10, 11, 12) der zweiten Gruppe parallel zueinander verlaufen.

5. Getriebegehäuse (2) nach Anspruch 4,
**dadurch gekennzeichnet, dass**
die Bohrungen (10, 11, 12) der zweiten Gruppe parallel zu der Ebene der Anschlussfläche (7) verlaufen.

6. Getriebegehäuse (2) nach einem der vorherigen Ansprüche, **dadurch gekennzeichnet, dass**
die erste Gruppe von Bohrungen (8, 9) insgesamt zwei Bohrungen und die zweite Gruppe von Bohrungen (10, 11, 12) insgesamt drei Bohrungen umfasst, wobei die Bohrungen (8, 9) der ersten Gruppe derart positioniert sind, dass die erste Bohrung (8) dem Ablassen von Öl und die zweite Bohrung (9) dem Messen des Ölstandes dient, wenn das Getriebegehäuse (2) derart ausgerichtet ist, dass die Anschlussfläche (7) zur Seite weist und die Bohrungen (10, 11, 12) der zweiten Gruppe nach oben gerichtet sind.

7. Getriebegehäuse (2) nach Anspruch 6,
**dadurch gekennzeichnet, dass**
die Bohrungen (8, 9) der ersten Gruppe derart positioniert sind, dass die erste Bohrung (8) der Entlüftung und dem Befüllen und die zweite Bohrung (9) der Messung des Ölstandes dient, wenn das Getriebegehäuse (2) derart ausgerichtet ist, dass die Anschlussfläche (7) zur Seite weist und die Bohrungen (10, 11, 12) der zweiten Gruppe nach unten gerichtet sind.

8. Getriebegehäuse (2) nach Anspruch 6 oder 7,
**dadurch gekennzeichnet, dass**
die beiden Bohrungen (8, 9) der ersten Gruppe derart positioniert sind, dass die erste Bohrung (8) dem Ablassen von Öl und die zweite Bohrung (9) der Entlüftung und dem Befüllen dient, wenn das Getriebegehäuse (2) derart ausgerichtet ist, dass die Anschlussfläche (7) zur Seite weist und die Bohrungen (10, 11, 12) der zweiten Gruppe zur Seite weisen.

9. Getriebegehäuse (2) nach einem der Ansprüche 6 bis 8, **dadurch gekennzeichnet, dass**
die Bohrungen (8, 9) der ersten Gruppe derart positioniert sind, dass sie in den Gehäuseinnenraum an dessen äußerem Rand münden, wobei die erste Bohrung (8) in Bezug auf die Getriebeachse (X) für die Getriebeausgangswelle etwa eine 7-Uhr-Stellung und die zweite Bohrung (9) etwa eine 4-Uhr-Stellung einnimmt, wenn die Anschlussfläche (7) zur Seite gerichtet ist und die Bohrungen (10, 11, 12) der zweiten Gruppe nach oben weisen.

10. Getriebegehäuse (2) nach einem der Ansprüche 6 bis 9, **dadurch gekennzeichnet, dass**
die Bohrungen (10, 11, 12) der zweiten Gruppe derart positioniert sind, dass bei nach oben gerichteter Anschlussfläche (7) eine erste Bohrung (10) dem Ablassen von Öl und eine zweite Bohrung (11) zur Messung des Ölstandes dient und bei nach unten gerichteter Anschlussfläche die erste und/oder der zweiten Bohrung (10, 11) der Entlüftung und dem Befüllen und die zwischen der ersten und der zweiten Bohrung (10, 11) liegende dritte Bohrung (12) zur Messung des Ölstandes dient.

11. Getriebegehäuse (2) nach Anspruch 10,
**dadurch gekennzeichnet, dass**
die drei Bohrungen (10, 11) der zweiten Gruppe in Form eines Dreiecks angeordnet sind, wobei die erste Bohrung (10) der zweiten Gruppe an dem fern zu der Anschlussfläche (7) liegenden Endbereich der Gehäuseseite, in welche sie eingebracht ist, liegt, die zweite Bohrung (11) an dem zur Anschlussfläche (7) weisenden Endbereich der Gehäuseseite angeordnet ist und die dritte Bohrung (12) in Getriebeachsenrichtung (X) zwischen der ersten und zweiten Bohrung (10, 11), aber seitlich beabstandet von diesen positioniert ist.

12. Getriebeeinheit (1) mit einem Getriebegehäuse (2), **dadurch gekennzeichnet, dass**
das Getriebegehäuse (2) nach einem der vorherigen Ansprüche ausgebildet ist.

13. Getriebemotor mit einem Motor und einer daran fixierten Getriebeeinheit (1), das ein Getriebegehäuse (2) besitzt, **dadurch gekennzeichnet, dass**
das Getriebegehäuse (2) nach einem der Ansprüche 1 bis 11 ausgebildet ist.
